# EUROPEAN PATENT APPLICATION

(11) **EP 2 695 691 A1**
(43) Date of publication of application: **12.02.2014**
(21) Application number: 13179129.5
(22) Date of filing: 02.08.2013
(51) Int. Cl.: B23D 51/16, B23D 59/00

(54) **Control circuit for reciprocating saws**

(30) Priority: 06.08.2012 US 201261679942 P
(71) Applicant: Black & Decker Inc., Newark, Delaware 19711 (US)
(72) Inventor: Leh, Jason K., Rosedale, MD Maryland MD21237 (US); Cirincione II, Robert, Towson, MD Maryland 21286 (US)
(74) Representative: Cavalier, Marcus Alexander Mawson

(57) **Abstract**

A reciprocating saw (20) with a control system (50), which includes a rotational rate sensor (51) having a resonating mass and a controller (36) electrically connected to the rotational rate sensor (51). The rotational rate sensor (51)detects angular or lateral displacement of the resonating mass and generates a signal indicative of the detected angular or lateral displacement, such that angular or lateral displacement is directly proportional to a rotational speed at which the reciprocating saw (20) rotates about an axis (X). Based on the generated signal, the controller (36) initiates a protective operation to avoid undesirable rotation of the reciprocating saw (20).

## Description

The present application derives priority from US Provisional Application No. 61/679,942, filed on August 6, 2012, currently pending, which is hereby incorporated by reference in its entirety.

The disclosure relates generally to reciprocating saws and, more particularly, to a control system having a rotational rate sensor for detecting the onset of a rotational condition in a reciprocating saw.

When an operator uses a reciprocating saw to cut a workpiece in a vertical direction, the operator usually exerts a downward force to help move the saw blade through the workpiece. Once the operator completes the cut, the reciprocating saw may accelerate downwardly at a fast rate unless the operator remembers to decrease the downward force.

Therefore, it is desirable to provide an improved technique for detecting the onset of such condition in a reciprocating saw. The statements in this section merely provide background information related to the present disclosure and may not constitute prior art.

In one aspect of the disclosure, a control system is provided for use in a reciprocating saw. The control system includes a rotational rate sensor having a resonating mass and a controller electrically connected to the rotational rate sensor. The rotational rate sensor detects angular or lateral displacement of the resonating mass and generates a signal indicative of the detected angular or lateral displacement, such that angular or lateral displacement is directly proportional to a rotational speed at which the power tool rotates about an axis. Based on the generated signal, the controller initiates a protective operation to avoid undesirable rotation of the power tool.

In another aspect of the disclosure, the control scheme employed by the power tool may initiate different protective operations for different tool conditions.

In different aspect of the disclosure, the control scheme may initiate a protective operations based on input from two different sensors.

In yet another aspect of the disclosure, the control scheme employed by the power tool may initiate protective operations based on the rotational energy experienced by the tool.

For a more complete understanding of the invention, its objects and advantages, reference may be made to the following specification and to the accompanying drawings.
FIG. 1 is a partial side section view of a reciprocating saw embodying the present invention with the spindle in a fully retracted position;
FIG. 2 is the partial side section view of FIG. 1 with the spindle in a fully extended position;
FIG. 3 is a simplified block diagram of an exemplar control system;
FIG 4 is a flowchart illustrating an exemplary method for determining the onset of a rotational condition according to the present disclosure;
FIGS. 5A and 5B are flowcharts illustrating an exemplary method for determining a rotational condition based on angular displacement according to the present disclosure; and

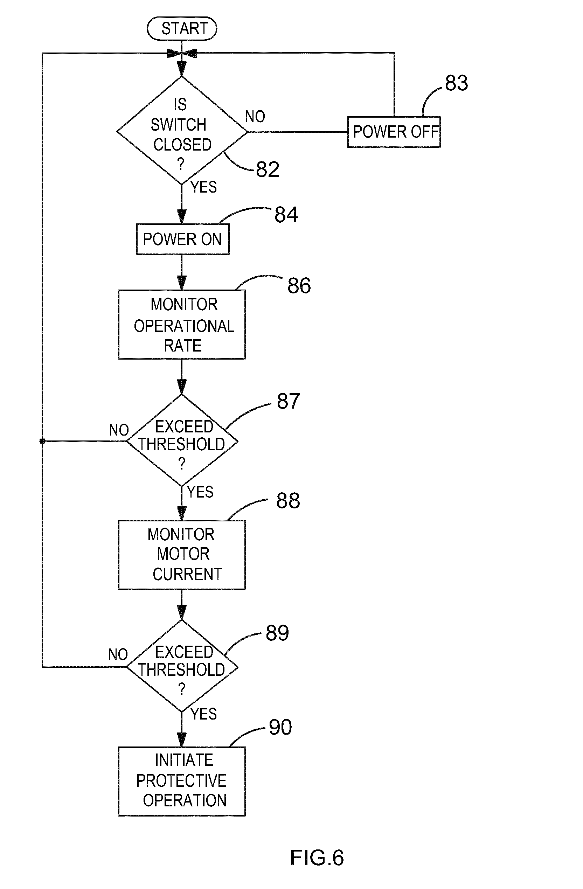

FIG. 6 is a flowchart illustrating an exemplary method for determining a condition based input from two different sensors according to the present disclosure.

The drawing described herein are for illustration purposes only and are not intended to limit the scope of the present disclosure in any way.

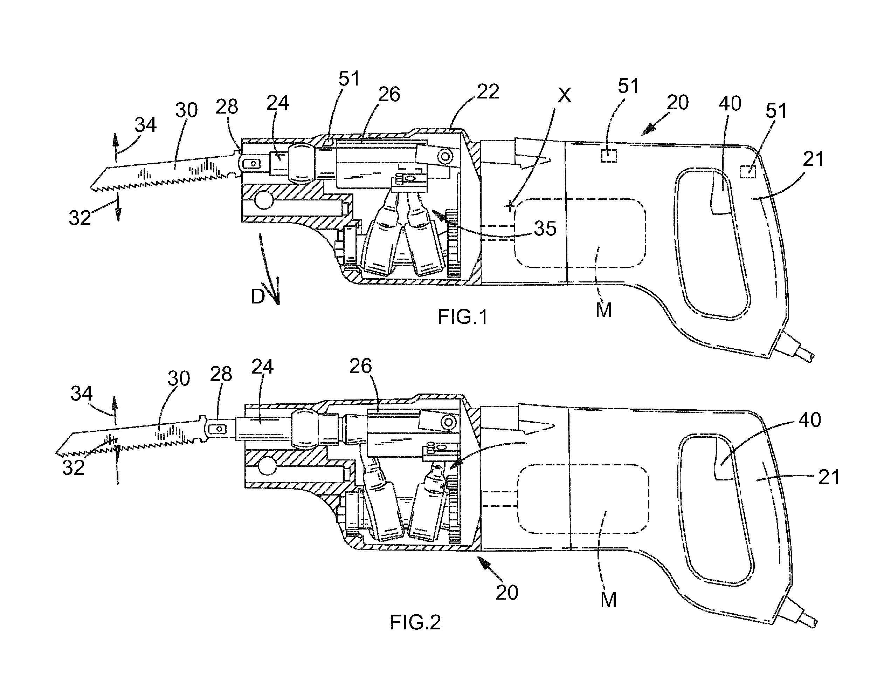

FIGS. 1 and 2 illustrate a reciprocating saw 20 embodying the present invention. The reciprocating saw 20 generally includes a main housing 22, a spindle 24 reciprocatably mounted within the housing 22, and a counterweight 26 reciprocatably mounted with the housing 22. The spindle 24 includes a front end 28 that supports a saw blade 30, which is designed to cut in a cutting direction 32 (i.e., in the direction of the saw teeth) opposite a second or non-cutting direction 34. The spindle 24 reciprocates the saw blade 30 through a cutting stroke (usually toward the housing 22) and a return stroke (usually away from the housing 22). The counterweight 26 preferably provides a vibration-reducing force that at least partially counteracts the forces created by movement of the spindle 24 and the saw blade 30.

The reciprocating saw 20 includes a drive assembly 35, which is connected to the spindle 24 and is operable to reciprocate the front end 28 of the spindle 24 and the saw blade 30 along a number of different travel paths. Further details on drive assembly 35 and reciprocating saw 20 may be found in US Patent No. 7,448,137, which is hereby fully incorporated by reference.

Persons skilled in the art will recognize that other reciprocating drive mechanisms may be incorporated into reciprocating saw 20. For example, US Patent No. 6,810,589, which is hereby fully incorporated by reference, teaches a different drive mechanism.

Drive mechanism 35 is preferably drivably coupled to an electric motor M. Operation of the reciprocating saw 20 is controlled through the use of an operator-actuated switch 40 embedded in the handle 21 of the reciprocating saw 20. The switch 40 regulates current flow from a power supply 29 to the motor M.

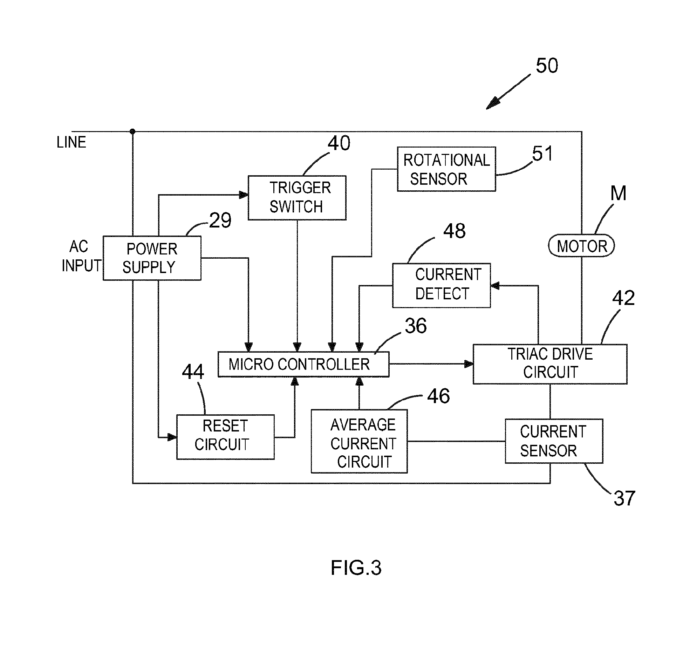

Referring to FIG. 3, the reciprocating saw 20 is further configured with a control system 50. The control system 50 may include a rotational rate sensor 51, a current sensor 34, and a microcontroller 36 preferably embedded in housing 22 and/or handle 21 of the reciprocating saw 20. Persons skilled in the art are referred to US Patent No. 7,681,659, which is hereby fully incorporated by reference, for further information on control system 50.

Rotational rate sensor 51 may be an accelerometer or gyroscope preferably embedded in housing 22 and/or handle 21 of the reciprocating saw 20. The orientation of rotational rate sensor 51 is such that it detect when the front area of reciprocating saw 20 (i.e., the area of and near to blade 30) moves than handle 21, resulting in a rotation along direction D (FIG. 1). Such rotation could occur when the user is moving reciprocating saw 20 downwardly as the user is cutting through a vertical panel. When the bottom of the panel is reached and the blade 30 moves beyond the panel, the front area of reciprocating saw 20 (i.e., the area of and near to blade 30) will move faster than handle 21, resulting in a rotation along direction D. Person skilled in the art shall understand that the rotational rate sensor 51 is preferably configured to detect rotational motion of the reciprocating saw 20 about an axis X substantially perpendicular to the longitudinal axis of the spindle 24 (in FIG. 1, axis X is substantially perpendicular to the plane containing the paper on which FIG. 1 is drawn).

The rotational rate sensor 51 in turn communicates a signal indicative of any rotational motion to the controller 36 for further assessment. In a preferred embodiment, the operating principle of the rotational rate sensor 51 is based on the Coriolis effect. Briefly, the rotational rate sensor is comprised of a resonating mass. When the reciprocating saw 20 is subject to rotational motion along direction D, the resonating mass will be laterally displaced in accordance with the Coriolis effect, such that the vertical displacement is directly proportional to the angular rate. It is noteworthy that the resonating motion of the mass and the vertical movement of the mass occur in a plane which is orientated parallel to the rotational axis of the shaft 24.

Capacitive sensing elements are then used to detect the vertical displacement and generate an applicable signal indicative of the vertical displacement. An exemplary rotational rate sensor is the ADXRS150 or ADXRS300 gyroscope device commercially available from Analog Devices. Other types of rotational sensors, such as angular speed sensors, accelerometers, etc., are also within the scope of this disclosure.

The microcontroller 36 assesses the rotational motion of the reciprocating saw 20 to detect an unacceptable rotational condition. Upon detecting an unacceptable rotational condition, the microcontroller 36 will initiate a protective operation intended to minimize and/or avoid any undesired rotation of the reciprocating saw 20. For instance, when the angular velocity of the reciprocating saw 20 exceeds some empirically derived threshold, the microcontroller 36 may cut power to the motor M. A few exemplary techniques for assessing the rotational condition of the tool are further described below. It is readily understood that other techniques for assessing the rotational condition of the tool are also within the scope of this disclosure.

Operation of an exemplary control circuit 50 is further described below in relation to FIG. 3. A power supply circuit 29 is coupled to an AC power line input and supplies DC voltage to operate the microcontroller 36. The trigger switch 40 supplies a trigger signal to the microcontroller 36 which indicates the position or setting of the trigger switch 40 as it is manually operated by the power tool operator. Drive current for operating the motor M is controlled by a triac drive circuit 42. The triac drive circuit 42 is, in turn, controlled by a signal supplied by microcontroller 36. If desired, the control system 50 may include a reset circuit 44 which, when activated, causes the microcontroller 36 to be re-initialized.

The microcontroller 36 is preferably supplied with a signal from a current detector circuit 48. The current detector circuit 48 is coupled to the triac drive circuit 42 and supplies a signal indicative of the conductive state of the triac drive circuit 42. If for some reason the triac drive circuit 42 does not turn on in response to the control signal from the microcontroller 36, this condition is detected by the current detector circuit 48.

A current sensor 37 is connected in series with the triac drive circuit 42 and the motor M. In an exemplary embodiment, the current sensor 37 may be a low resistance, high wattage resistor. The voltage drop across the current sensor 37 is measured as an indication of actual instantaneous motor current. The instantaneous motor current is supplied to an average current measuring circuit 46 which in turn supplies the average current value to the microcontroller 36. The microcontroller 36 may use the average current to evaluate the rotational condition of the tool.

In operation, the trigger switch 40 supplies a trigger signal that varies in proportion to the switch setting to the microcontroller 36. Based on this trigger signal, the microcontroller 36 generates a control signal which causes the triac drive circuit 42 to conduct, thereby allowing the motor M to draw current. Motor torque is substantially proportional to the current drawn by the motor M and the current draw is controlled by the control signal sent from the microcontroller 36 to the triac drive circuit 42. Thus, the microcontroller 36 can control the torque imparted by the motor M.

Pulse mode is an exemplary protective operation which may be initiated upon detecting a rotational condition. Upon detecting the onset of a rotational condition, the microcontroller 36 may operate the motor M in a pulse mode. During pulse mode, the motor current is pulsed at a predetermined frequency with a predetermined on-time. In one exemplary embodiment, the series of current pulses is designed such that the time between pulses is set between 0.1 and 1 second. Alternatively, the series of current pulses create torque pulses that may have a peak torque that is greater than the average torque delivered by the spindle 24. In this way, the torque pulses may allow the tool 10 to break through the burrs or workpiece restrictions that are ca using the impending kickback condition. Further details regarding this protection operation may be found in U.S. Pat. No. 6,479,958 which is incorporated herein by reference.

Another exemplary protective operation is to reduce the speed of the spindle 24 to a lower non-zero value. In the context of the control circuit 50 described above, the controller 36 can override the trigger signal from the trigger switch 40 or other operator input commands. Upon detecting a triggering rotational condition, the controller 36 sends a control signal to the triac drive circuit 42 which reduces the voltage which in turn reduces the current draw of the motor M, thereby reducing the speed of the spindle. For example, the speed could be reduced to 30% of its current operational amount or a predefined fixed speed level.

The reciprocating saw 20 would operate at his reduced level until the operator released the trigger switch 40 and re-engaged it or cycled tool power. Another method would involve resetting torque to its original operation level if the operator regains control of the tool. In this way, the operator has regained control of the tool without terminating or resetting operation of the tool.

Other techniques for reducing the speed of the spindle 24 are also within the scope of this disclosure. For example, DC operated motors are often controlled by pulse width modulation, where the duty cycle of the modulation is proportional the speed of the motor M and thus the speed of the spindle 26. In this example, the microcontroller 36 may be configured to control the duty cycle of the motor control signal.

In other instances, the protective operation is intended to terminate or reset operation of the reciprocating saw. Exemplary protective operations of this nature include (but are not limited to) disengaging the motor M from the spindle 26, braking the motor M, braking the spindle 26, and disconnecting power from the motor M. Depending on the size and orientation of the reciprocating saw 20, one or more of these protective operations may be initiated to prevent undesirable rotation of the reciprocating saw 20.

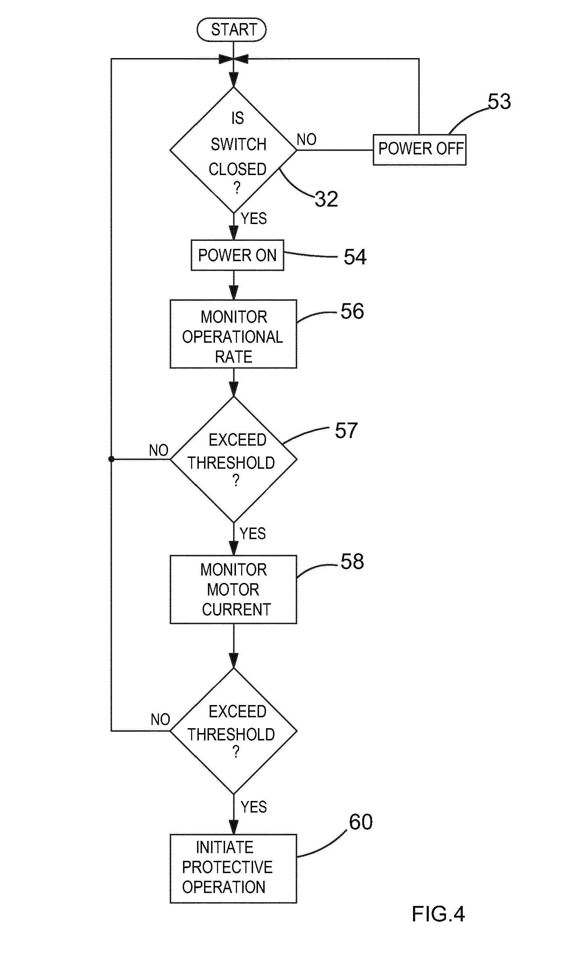

An exemplary method for detecting a rotational condition of the tool is illustrated in FIG. 4. First, the operator switch is checked at step 52 to determine if the tool is operating. If the switch is not closed, then power is not being supplied to the motor as indicated at 53. In this case, there is no need to monitor for kickback conditions. Conversely, if the switch is closed, then power is being supplied to the motor as indicated at 54.

During tool operation, rotational motion of the reciprocating saw 20 is monitored at 56 based on the signal from the rotational rate sensor 51. When the rotational rate of the reciprocating saw 20 exceeds some empirically derived threshold (as shown at 57), this may indicate the saw going beyond the panel condition; otherwise, processing control returns to the beginning of the algorithm.

Prior to initiating some protective operation, the microcontroller 36 also evaluates the current draw of the motor M at 58. Specifically, the rate of change of the motor current is measured. When the rate of change is positive and exceeds some predetermined threshold, then one or more protective operations are initiated at 60. If either the rate of change is not positive or the rate of change does not exceeds the threshold, then processing control returns to the beginning of the algorithm. In this case, a sudden change in the current draw is optionally used to confirm the end of the panel cutting operation. It is envisioned that inputs from other sensors, such as a temperature sensor, may be used in a similar manner. It is to be understood that only the relevant steps of the control scheme are discussed above, but that other software-implemented instructions may be needed to control and manage the overall operation of the tool.

In another aspect of the present invention, the control scheme employed by the reciprocating saw 20 may initiate different protective operations for different tool conditions. For example, the amount of angular displacement experienced by the tool may dictate different protective operations. When angular displacement is within a first range (e.g., less than 31°), the operator is presumed to have control of the reciprocating saw 20 and thus no protective operations are needed. When the angular displacement exceeds this first range, it may be presumed that the reciprocating saw 20 has encountered a more serious condition and therefore some protective operation may be needed.

In this second range of angular displacement (e.g., between 30° to 90°), the control scheme may initiate a pulse mode. In contrast, when the angular displacement exceeds the second range (e.g., greater than 90°), it may be presumed that the operator has lost control of the reciprocating saw 20. In this instance, a different protective operation may be initiated by the control scheme, such as disconnecting the power to the motor M.

Depending on the complexity of the control scheme, three or more ranges of displacement may be defined for a given power tool. Within a range, protective operations may be initiated based on the angular displacement or a combination of parameters, such as angular acceleration, angular velocity, motor current, rate of change of motor current, motor temperature, switch temperature, etc. It is readily understood that the number and size of the ranges may vary for different control schemes and/or different types of tools. It is also envisioned that different protective operations may be initiated based on ranges of other parameters (e.g., ranges of angular velocity). Likewise, one or more protective operations may be associated with different ranges (i.e., tool conditions).

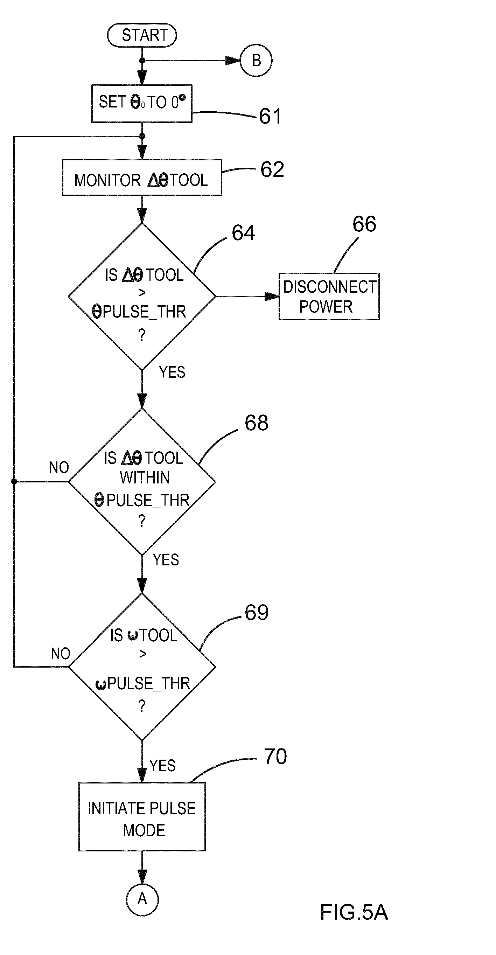

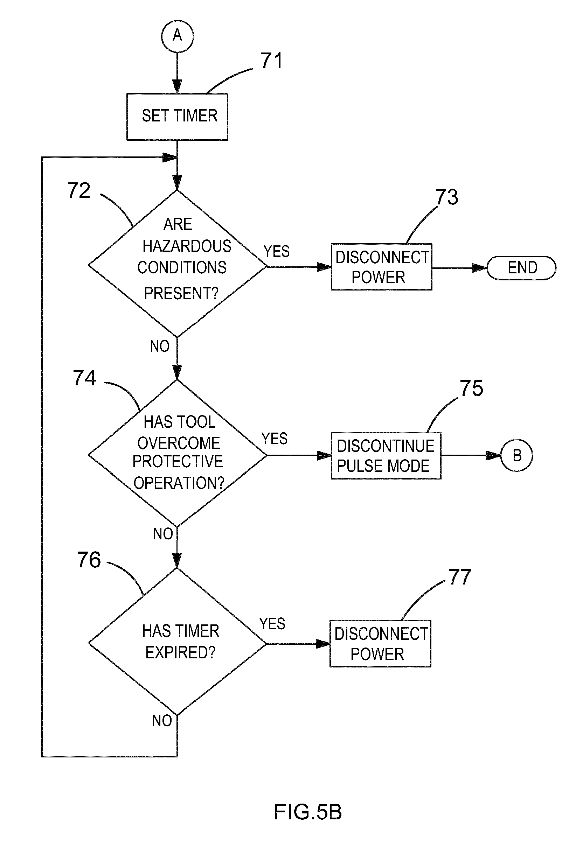

An exemplary method for detecting a rotational condition based on an angular displacement of the reciprocating saw 20 is further described below in relation to FIGS. 5A and 5B. During tool operation, angular displacement is monitored in relation to a start point (θ₀). In step 61, this starting point is initialized to zero. Any subsequent angular displacement of the reciprocating saw 20 is then measured in relation to this reference. Alternatively, reciprocating saw 20 tool may employ a starting point reset function. At power-up, the starting point is set. If the operator repositions the tool (e.g., rotate it at a very slow rate), then the starting point is reset. For example, if the tool is rotated at a rate less than 5 degree per second, then the starting position is reset. Angular displacement is then measured from the new starting point.

Angular displacement of the reciprocating saw 20 is then monitored at step 62. In this exemplary embodiment, the angular displacement is measured in relation to the reference value (θ₀) and derived from the rate of angular displacement over time or angular velocity (ω_{TOOL}) as provided by a rotational rate sensor 51. While the rotational rate sensor described above is presently preferred for determining angular displacement of the reciprocating saw 20, it is readily understood that this additional aspect of the present invention is not limited to this type of sensor. On the contrary, angular displacement may be derived from a different type of rotational rate sensor 51, an acceleration sensor or some other manner for detecting rotational displacement of the reciprocating saw 20.

Different protective operations may be initiated based on the amount of angular displacement as noted above. Angular displacement is assessed at steps 64 and 68. When the angular displacement exceeds some upper threshold (θ_{zone2-min}), then a first protective operation is initiated at step66. In this example, power to the motor is disconnected, thereby terminating operation of the reciprocating saw 20.

When the angular displacement exceeds some lower threshold (θ_{zone1-min}), then a different protective operation, such as pulsing the motor current, may be initiated at 70. In this exemplary embodiment, an instantaneous measure of angular velocity must also exceed some minimum threshold before a pulse mode is initiated as shown at step 69. If neither of these criteria are met, no protective actions are taken and operating conditions of tool continue to be monitored by the control scheme.

During pulse mode, the control scheme continues to monitor tool operating conditions. Hazardous conditions may be monitored as shown at step72. For instance, to prevent motor burn up, motor current may be monitored. If the motor current spikes above some predefined threshold, then power to the motor M is disconnected at 73. To protect the tool operator, angular displacement may also be monitored. If angular displacement exceeds a threshold indicative of lost control, then the power to the motor M is also disconnected. It is readily understood that other types of hazardous conditions may be monitored.

In addition, pulse mode is only maintained for a brief period of time. A timer is initiated at step 71 and pulse mode continues until the timer has expired as shown at 76. During this time, the control scheme may also monitor if the restrictions that caused the kickback condition have been overcome as shown at step 74. If the restrictions are overcome, then pulse mode is discontinued at step 75. When the timer expires without overcoming the restrictions, then power to the motor is disconnected as shown at 77.

An exemplary method for detecting a rotational condition based on input from at least two sensors is described below in relation to FIG. 5. First, the operator switch is checked at step 82 to determine if the tool is operating. If the switch is not closed, then power is not being supplied to the motor as indicated at 83. In this case, there is no need to monitor for kickback conditions. Conversely, if the switch is closed, then power is being supplied to the motor as indicated at 84.

During tool operation, rotational motion of the reciprocating saw 20 is monitored at 86 based on the signal from the rotational rate sensor. When the rotational rate of the tool exceeds some empirically derived threshold (as shown at 87), this may indicate the onset of kickback condition; otherwise, processing control returns to the beginning of the algorithm. In addition to rotational rate of the tool about its spindle axis, it is envisioned that the rotational displacement, rotational acceleration, or some combination thereof as derived from the sensor signal may be used to determine the onset of a condition.

Prior to initiating some protective operation, the microcontroller 36 also evaluates the current draw of the motor M at 88. Specifically, the rate of change of the motor current is measured. When the rate of change is positive and exceeds some predetermined threshold, then one or more protective operations are initiated at 90. If either the rate of change is not positive or the rate of change does not exceeds the threshold, then processing control returns to the beginning of the algorithm. In this case, a sudden change in the current draw is used to confirm the onset of the kickback condition. While the above description was provided with reference to a rotational rate sensor and a current sensor, it is readily understood that the broader aspects of the present invention encompass making such a determination may be based on input from other types of sensors.

Determination of a rotational condition may also be based on other types of criteria. For example, a rotational condition may be assessed based on the rotational energy experienced by the power tool. In this example, rotational energy is defined as E_{ω_TOOL} = (I)(ω_{TOOL})², where I is the moment of inertia and ω_{TOOL} is the angular velocity. For this computation, the rate of angular displacement could be measured by a rotational rate sensor; whereas, the moment of inertia of the tool (I_{TOOL}) could be preprogrammed into the controller based on the mass properties of the reciprocating saw 20 (e.g., mass, rotation inertia and a center of gravity position) and a distance measure between the center of gravity position and the spindle axis. Initiating a protective operation based on E_{ω-TOOL} is desirable because the energy condition is not tool specific and therefore could be applied to a variety of applications.

Persons skilled in the art will recognize that rotational rate sensors 51 can be also used to detect a kickback condition, which forces reciprocating saw 20 to move in a rotational direction opposite to direction D. The same control system 50 and processes described above can be used to detect and react to such condition.

Furthermore, if rotational rate sensors 51 are gyroscopes, such sensors can be used to detect a blade pinch condition where saw blade 30 gets caught in the workpiece and the whole reciprocating saw 20 proceeds to reciprocate, rather than only saw blade 30. Sensors 51 (and control system 50) can detect such reciprocating movement and react to such condition, such as slowing down the reciprocating speed or depowering the motor M.

Persons skilled in the art will also recognize that a gyroscope or multi-axes accelerometer can be used as rotational rate sensor 51. Such arrangement can be used to measure vibration in three axes (e.g., X-, Y- and Z-axes). Microprocessor 36 can be obtain the sensed information from sensor 51 and current sensor 37, which is used to detect load. If the current sensor 37 shows that there is no load on motor M (i.e., the cutting operation has not started even though motor M is receiving power), microprocessor 36 can decrease the speed to reduced vibration. If on the other hand current sensor 37 detects a load, speed can be increased to complete the cutting operation and then decreased again once the cutting operation is complete.

The above description is merely exemplary in nature and is not intended to limit the present disclosure, application, or uses.

## Claims

1. A reciprocating saw comprising:
a housing having a front end and a back end;
a handle disposed on the back end of the housing;
a motor disposed in the housing;
a spindle reciprocatably mounted within the front end of the housing;
a drive assembly connected to the spindle and the motor, the drive assembly being operable to reciprocate the spindle; and
a control system for controlling the motor, the control system having a rotational rate sensor for sensing the rotational speed of the front end of the housing relative to the handle,
wherein the control system lowers the speed of the motor if the rotational speed exceeds a first predetermined threshold.

2. The reciprocating saw of Claim 1, wherein the rotational rate sensor comprises at least one of the group consisting of an accelerometer and a gyroscope.

3. The reciprocating saw of Claim 1, wherein the speed of the motor is lowered by shutting off power to the motor.

4. The reciprocating saw of Claim 1, wherein the speed of the motor is lowered by pulsing power to the motor.

5. The reciprocating saw of Claim 1, wherein the control system further comprises a current sensor.

6. The reciprocating saw of Claim 1, wherein the control system disconnects the motor if the rotational speed exceeds a second predetermined threshold.

7. The reciprocating saw of Claim 1, wherein the control system raises the speed of the motor after a predetermined time period has passed from the moment when the control system lowered the speed of the motor.
